# EUROPÄISCHE PATENTANMELDUNG

(11) **EP 0 941 696 A1**
(43) Veröffentlichungstag der Anmeldung: **15.09.1999**
(21) Anmeldenummer: 98103738.5
(22) Anmeldetag: 03.03.1998
(51) Int. Cl.: A61B 5/117, G06K 9/00

(54) **Fingertippsensor mit integriertem Tastschalter**

(71) Anmelder: SIEMENS AKTIENGESELLSCHAFT, 80333 München (DE)
(72) Erfinder: Houdeau, Detlef, Dr., 84085 Langquaid (DE)

(57) **Zusammenfassung**

Bei einem Fingertippsensor mit einem biometrischen Sensorelement (2) zum Erfassen von Fingerabdrücken erfolgt die Aktivierung bzw. Deaktivierung durch Berühren bzw. Loslassen des Sensorelementes (2).

## Beschreibung

Die Erfindung betrifft einen Fingertippsensor mit einem biometrischen Sensorelement zum Erfassen von Fingerabdrücken Gemäß dem Oberbegriff des Anspruchs 1.

Für die Identifikation eines beispielsweise ambulanten Gerätebenutzers konnen Personenidentifikationsnummern verwendet werden. Weiterhin ist bekannt, personenspezifische Sicherheitsmerkmale, beispielsweise Fingerabdrücke (Minutien), mittels biometrischer Sensorelemente zu erfassen und in Abhängigkeit des Erfassungsergebnisses den Zugang zu einem Gerät, einem Raum etc. zu ermöglichen oder zu verweigern. Eine derartige Erfassung biometrischer Merkmale einer Person kann entweder allein oder in Verbindung mit Identifikationsnummern eingesetzt werden und erhöht nochmals bedeutend die Sicherheit gegen Mißbrauch.

Als biometrische Sensorelemente sind solche mit einer piezoelektrische Schicht bekannt, die, gesteuert mit einem Elektrodenfeld, örtliche Kapazitätsunterschiede ermittelt, die zur Erkennung der Minutien verwendet werden können. Weiterhin ist es bekannt, den Fingerabdruck direkt mit einem Kondensatorfeld abzufragen, bei dem der reine Höhenunterschied der Minutien zum Gegenelektrodenfeld ausgenutzt wird.

Ein Fingertipsensor dieser Art sollte jedoch insbesondere auch aus Energieersparnisgründen nur während der Berührung elektrisch aktiviert und abgefragt werden. Hierzu ist es bekannt, einen zusätzlichen Näherungsschalter vorzusehen, der mit dem biometrischen Sensor gekoppelt wird. Dies ist jedoch mit relativ hohem Aufwand verbunden.

Der Erfindung liegt daher die Aufgabe zugrunde, einen Fingertippsensor der eingangs genannten Art zu schaffen, dessen Aktivierung bzw. Deaktivierung beim Drücken bzw. Loslassen des Sensorelementes auf besonders einfache und kostengünstige Weise durchgeführt werden kann.

Diese Aufgabe wird erfindungsgemäß durch die Merkmale des Anspruchs 1 gelöst. Vorteilhafte Ausführungsformen der Erfindung sind in den weiteren Ansprüchen beschrieben.

Beim erfindungsgemäßen Fingertippsensor erfolgt die Aktivierung bzw. Deaktivierung des Sensorelementes durch Berühren bzw. Loslassen, vorzugsweise durch mechanisches Drücken bzw. Loslassen, des Sensorelementes.

Gemäß einer vorteilhaften Ausführungsform der Erfindung besteht das Sensorgehäuse aus einem Bodenteil und einem relativ zum Bodenteil verschiebbaren Deckelteil, an dem das Sensorelement gehaltert ist. Das Sensorelement und/oder das Deckelteil steht mit einer Feder in Wirkverbindung, die eine das Sensorelement und Deckelteil vom Bodenteil entfernende Vorspannkraft erzeugt. Weiterhin ist am Bodenteil ein Schaltkontakt zur Aktivierung bzw. Deaktivierung des Fingertippsensors vorgesehen, der bei niedergedrücktem Sensorelement geschlossen ist, wodurch dessen Aktivierung bewirkt wird, und der bei nicht gedrücktem Sensorelement geöffnet ist, so daß das Sensorelement deaktiviert ist.

Der erfindungsgemäße Fingertippsensor ermöglicht auf eine sehr einfache und kostengünstige Weise eine Aktivierung bzw. Deaktivierung. Besonders vorteilhaft ist hierbei, daß der Benutzer taktil die Mitte des Sensorfeldes ermitteln kann, wobei in diesem Bereich die notwendige Fingerkraft am geringsten ist. Hierdurch wird eine sichere Erfassung der Minutien gewährleistet. Weiterhin bekommt der Benutzer eine mechanische (bedingt akustische) 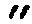 Quittierung" der erfolgreichen Berührung, wenn das Sensorelement am Schaltkontakt anschlägt. Die Prellzeit wird verwendet, um eine ausreichend lange Berührung des Sensors zu gewährleisten. Vorteilhaft ist ferner, daß der erfindungsgemäße Fingertippsensor in das Bedienfeld konventioneller Telefone, insbesondere Handys, integriert werden kann.

Gemäß einer vorteilhaften Ausführungsform der Erfindung besteht die Feder aus einer Blattfeder, die am Bodenteil befestigt ist und einen zum Sensorelement hin konvex gekrümmten Mittelbereich aufweist, der an der Rückseite des Sensorelementes anliegt. Derartige Blattfedern sind kostengünstig und erlauben eine niedrige Bauweise. Gleichzeitig kann eine derartige Blattfeder als Kontaktierungselement zum Schließen des Schaltkontakts verwendet werden, so daß hierzu keine Zusatzelektronik erforderlich ist.

Zweckmäßigerweise besitzt das Deckelteil eine umlaufende, zum Sensorfeld hin verlaufende Schrägung. Hierdurch kann die Mitte des Sensorfeldes auf einfache Weise taktil erfaßt werden, was ein leichtes Auffinden der genauen Fingerposition ermöglicht.

Vorteilhafterweise ist das Deckelteil in seinem Randbereich innerhalb von Aussparungen im Bodenteil mechanisch geführt. Dies ermöglicht eine sehr einfache Ausführungsform, ohne daß separate Führungsteile angeklebt oder angeschweißt werden müßten.
Das Gehäuse kann aus einfachen Spritzkunststoffteilen, z.B. ABS bestehen. Die Einfärbung des Deckels kann im Gerätedesign erfolgen.

Die Erfindung wird nachfolgend anhand der Zeichnungen beispielshaft näher erläutert. In diesen zeigen:
- Figur 1 :: einen Querschnitt durch den erfindungsgemäßen Fingertippsensor im nicht niedergedrückten Zustand des Sensorelementes, d.h. im deaktivierten Zustand,
- Figur 2 :: eine Draufsicht auf den Fingertippsensor von Figur 1, und
- Figur 3 :: den Fingertippsensor von Figur 1 im niedergedrückten Zustand des Sensorelements, d.h. im aktivierten Zustand des Fingertippsensors.

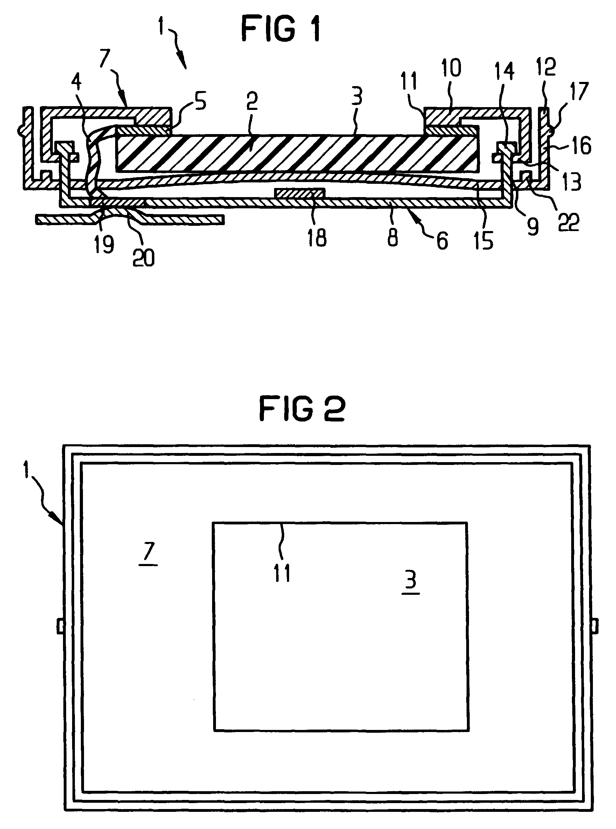

Aus den Figuren 1 bis 3 ist ein Fingertippsensor 1 mit einem biometrischen Sensorelement 2 ersichtlich. Das Sensorelement 2 weist eine ebene obere Sensorfläche 3 auf, die derart beschaffen ist, daß beim Auflegen eines Fingers auf die Sensorfläche 3 die Minutien, d.h. der Fingerabdruck, erfaßt werden kann. Die Stromversorgung des Sensorelementes 2 und die elektrische Verbindung zwischen der oberen Sensorfläche 3 zu einer nicht dargestellten elektronischen Auswerteeinheit erfolgt über flexible Leiterbahnen 4, die mit entsprechenden Kontaktstellen 5 auf der oberen Sensorfläche 3 in Verbindung stehen.

Das Sensorelement 2 ist in einem Gehäuse aufgenommen, das im wesentlichen aus einem Bodenteil 6 und einem Deckelteil 7 besteht. Das Bodenteil 6 ist im wesentlichen napfartig ausgebildet und weist einen ebenen Bodenabschnitt 8 mit rechteckigem Grundriß sowie Seitenwände 9 auf, die sich von den Randbereichen des Bodenabschnitts 8 vertikal nach oben erstrecken.

Das Deckelteil 7 besteht aus einem oberen horizontalen Deckelabschnitt 10 mit einer mittigen rechteckigen Aussparung 11, vertikalen Seitenwandabschnitten 12, die sich vom äußeren Rand des horizontalen Deckelabschnitts 10 aus nach unten erstrecken, sowie Führungsabschnitten 13, die sich vom unteren Rand der Seitenwandabschnitte 12 aus horizontal nach innen, d.h. zum Sensorelement 2 hin, erstrecken.

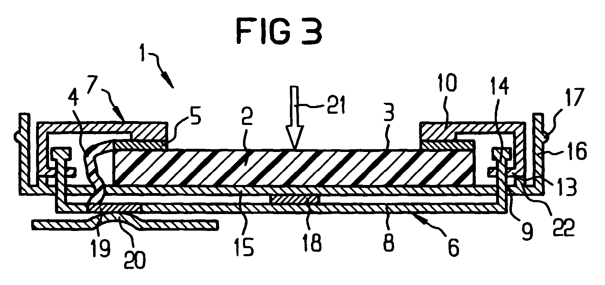

Wie in den Figuren 1 und 3 angedeutet ist, durchdringen die horizontalen Führungsabschnitte 13 des Deckelteils 7 nicht näher dargestellte Führungsaussparungen in den Seitenwänden 9 des Bodenteils 6. Diese Führungsaussparungen erstrecken sich vom verbreiteten oberen Endbereich 14 der Bodenteil-Seitenwände 9 ein Stück weit vertikal nach unten. Aufgrund dieser Ausgestaltung können die Führungsabschnitte 13 des Deckelteils 7 vertikal in den Führungsaussparungen der Bodenteil-Seitenwände 9 verschoben werden, so daß das gesamte Deckelteil 7 und damit auch das Sensorelement 2, das an der Unterseite des horizontalen Deckelabschnitts 10 befestigt ist, relativ zum Bodenteil 6 in vertikaler Richtung verschoben werden kann.

Das Sensorelement 2 ist als ebenes, rechteckiges Plättchen ausgebildet, das größer als die Aussparung 11 im Deckelteil 7 ist, so daß es sich über die Aussparung 11 seitlich nach außen erstreckt und im Randbereich seiner Oberseite an der Unterseite des horizontalen Deckelabschnitts 10 befestigt werden kann. Die Sensorfläche 3 innerhalb der Aussparung 11 des Deckelteils 7 bildet somit dasjenige Sensorfeld, das von oben her frei zugänglich ist und auf das der Finger aufgelegt werden kann.

Zwischen dem ebenen Bodenabschnitt 8 des Bodenteils 6 und dem Sensorelement 2 ist eine Feder 15 in der Form einer Blattfeder angeordnet, die sich über die gesamte Breite des Bodenabschnitts 8 erstreckt und in den in den Figuren 1 und 3 ersichtlichen gegenüberliegenden vertikalen Seitenwänden 9 des Bodenteils 6 festgelegt ist. Diese Feder 15 durchdringt die vertikalen Seitenwände 9 und erstreckt sich weiter nach außen, wobei ihre Endabschnitte 16 vertikal nach oben abgeknickt sind. Diese vertikalen Endabschnitte 16 verlaufen mit geringem Abstand zu den vertikalen Seitenwandabschnitten 12 des Deckelteils 7 nach oben, so daß sie sich in horizontaler Richtung etwas bewegen können, ohne die Seitenwandabschnitte 12 zu berühren. Die hochragenden Endabschnitte 16 der Feder 15 dienen zur Halterung des Fingertippsensors 1 in einer Ausnehmung eines nicht dargestellten Gehäuses. Hierbei ist es möglich, den Fingertippsensor 1 in eine derartige Gehäuseausnehmung einzudrücken, wobei nach außen stehenden Wulste 17 der Endabschnitte 16 für eine entsprechende Verrastung im Gehäuse sorgen.

## Patentansprüche

1. Fingertippsensor mit einem biometrischen Sensorelement (2) zum Erfassen von Fingerabdrücken, **dadurch gekennzeichnet,** daß die Aktivierung bzw. Deaktivierung durch Berühren bzw. Loslassen des Sensorelementes (2) erfolgt.

2. Fingertippsensor nach Anspruch 1, **dadurch gekennzeichnet,** daß die Aktivierung bzw. Deaktivierung durch mechanisches Drücken bzw. Loslassen des Sensorelementes (2) erfolgt.

3. Fingertippsensor nach Anspruch 1 oder 2, wobei das Sensorelement (2) in einem Sensorgehäuse aufgenommen und mit einer elektronischen Auswerteeinrichtung elektrisch verbunden ist, **dadurch gekennzeichnet,** daß das Sensorgehäuse aus einem Bodenteil (6) und einem relativ zum Bodenteil (6) verschiebbaren Deckelteil (7) besteht, an dem das Sensorelement (2) gehaltert ist,
daß das Sensorelement (2) und/oder das Deckelteil (7) mit einer Feder (15) in Wirkverbindung steht, die eine das Sensorelement (2) und Deckelteil (7) vom Bodenteil (6) entfernende Vorspannkraft erzeugt,
und daß am Bodenteil (6) ein Schaltkontakt (18) zur Aktivierung bzw. Deaktivierung des Fingertippsensors (1) vorgesehen ist, der bei niedergedrücktem Sensorelement (2) geschlossen ist, wodurch dessen Aktivierung bewirkt wird, und der bei nicht niedergedrücktem Sensorelement (2) geöffnet ist, so daß das Sensorelement (2) deaktiviert ist.

4. Fingertippsensor nach Anspruch 3, **dadurch gekennzeichnet,** daß die Feder (15) aus einer Blattfeder besteht, die am Bodenteil (6) befestigt ist und einen zum Sensorelement (2) hin konvex gekrümmten Mittelbereich aufweist, der an der Rückseite des Sensorelements (2) anliegt.

5. Fingertippsensor nach Anspruch 3 oder 4, **dadurch gekennzeichnet,** daß sich der Schaltkontakt (18) mittig unterhalb des Sensorelements (2) befindet.

6. Fingertippsensor nach einem der vorhergehenden Ansprüche, **dadurch gekennzeichnet,** daß das Deckelteil (7) eine umlaufende, zum Sensorfeld hin verlaufende Schrägung aufweist.

7. Fingertippsensor nach einem der vorhergehenden Ansprüche, **dadurch gekennzeichnet,** daß das Deckelteil (7) in seinem Randbereich innerhalb von Führungsaussparungen im Bodenteil (6) mechanisch geführt ist.
